# EUROPEAN PATENT APPLICATION

(11) **EP 4 822 762 A1**
(43) Date of publication of application: **14.10.2026**
(21) Application number: 23960537.1
(22) Date of filing: 07.12.2023
(51) Int. Cl.: H01M 4/134, H01M 4/62, H01M 50/46, H01M 50/491

(54) **ELECTROCHEMICAL APPARATUS AND ELECTRONIC APPARATUS**

(71) Applicant: Ningde Amperex Technology Limited, Ningde, Fujian 352100 (CN)
(72) Inventor: LONG, Xia, Ningde, Fujian 352100 (CN); QU, Changming, Ningde, Fujian 352100 (CN)
(74) Representative: Kraus & Lederer PartGmbB
(86) International application number: PCT/CN2023/137042
(87) International publication number: WO 2025/118225

(57) **Abstract**

An electrochemical apparatus and an electronic apparatus are provided. The electrochemical apparatus includes a positive electrode plate, a negative electrode plate, and a separator. The negative electrode plate includes a negative electrode current collector. A surface of the negative electrode current collector is provided with a first negative electrode active material layer containing a silicon-based material. The separator is disposed between the negative electrode plate and the positive electrode plate. A polymer particle layer is disposed on a surface of the separator adjacent to the first negative electrode active material layer. Space is reserved at bending regions to buffer electrode plate extrusion and fracture by matching separators coated with polymer particle layers of different thicknesses according to the varying silicon content in the negative electrode active material layer coated on the surface of the negative electrode current collector in the negative electrode plate, overcoming the electrode plate fracture and lithium precipitation problems caused by silicon-based expansion, while maximizing the energy density.

## Description

### TECHNICAL FIELD

The present application relates to the field of energy storage technology, and particularly to an electrochemical apparatus and an electronic apparatus.

### BACKGROUND

Since the reversible capacity of silicon can reach up to 4200 mAh/g, silicon-based negative electrode materials are considered one of the effective strategies for improving the energy density of lithium-ion batteries. However, during the charging and discharging process, when lithium ions are embedded and de-embedded, silicon particles will undergo a volume expansion of more than 300%. The extremely high volume expansion will bring a series of problems. First, the extremely high volume expansion will cause damage to the solid electrolyte interface (SEI) film, leading to the electrolyte penetrating into the interior of the negative electrode plate, triggering a series of unstable reactions, such as the decomposition of the electrolyte and the repeated formation of SEI, thereby leading to the capacity decay and performance instability of the lithium-ion battery; second, the volume expansion of silicon may also cause the problem of electrode plate fracture at bending regions. The electrode plate must remain stable at bending regions during the charging and discharging cycles of the lithium-ion battery, and the volume expansion of silicon may lead to stress concentration in the electrode plate at bending regions, ultimately causing fracture, thereby reducing the lifespan and reliability of the lithium-ion battery.

### SUMMARY

In view of the above problems existing in the prior art, the present application proposes an electrochemical apparatus and an electronic apparatus. By configuring and designing the silicon content in the negative electrode plate and the polymer particle layer on the surface of the separator, space is reserved at bending regions to buffer the extrusion, aiming to solve the fracture at bending regions and interface problems of the negative electrode plate caused by silicon-based expansion, while improving the energy density of the lithium-ion battery.

According to a first aspect, the present application provides an electrochemical apparatus, including a positive electrode plate, a negative electrode plate, and a separator; where the negative electrode plate includes a negative electrode current collector and a surface of the negative electrode current collector is provided with a first negative electrode active material layer containing a silicon-based material; the separator is disposed between the negative electrode plate and the positive electrode plate; a polymer particle layer is disposed on a surface of the separator adjacent to the first negative electrode active material layer.

Based on a mass of the first negative electrode active material layer, a mass percentage of silicon is X; a thickness of the polymer particle layer is H. In some embodiments, 0 < X < 2% and 0 < H < 1 µm. In some embodiments, 2% ≤ X < 10% and 1 µm ≤ H < 2.8 µm. In some embodiments, 10% ≤ X < 25% and 2.8 µm ≤ H < 4 µm. In some embodiments, 25% ≤ X ≤ 30% and 4 µm ≤ H ≤ 5 µm. The thickness of the polymer particle layer is the thickness at a straight region. The thickness of the polymer particle layer at the bending region is greater than the thickness of the polymer particles at the straight region. This is because after winding, formation, and hot pressing during the battery preparation process, due to the influence of hot pressing, the polymer particle layer at the straight region is flattened, and the thickness of the polymer layer at the bending region changes little. When the polymer particle layer after hot pressing satisfies this relationship, it can inevitably ensure that the reserved space at the bending region is sufficient to withstand the stress generated by the expansion at the bending region. According to the varying silicon content in the negative electrode active material layer coated on one surface of the negative electrode current collector in the negative electrode plate, separators coated with polymer particle layers of different thicknesses are matched, which can reserve space at bending regions to buffer electrode plate extrusion and fracture, overcome the electrode plate fracture and lithium precipitation during cycling caused by silicon-based expansion, and maximize the energy density at the same time.

In some embodiments, 2% ≤ X < 5% and 1.5 µm ≤ H < 2.5 µm. In some embodiments, 5% ≤ X < 10% and 2.5 µm ≤ H < 2.8 µm. In some embodiments, 10% ≤ X < 15% and 2.8 µm ≤ H < 3.5 µm. In some embodiments, 15% ≤ X ≤ 20% and 3.5 µm ≤ H < 4 µm. When the silicon content in the negative electrode active material layer coated on one surface of the negative electrode current collector in the negative electrode plate and the thickness of the polymer particle layer on the matched separator satisfy this rule, the lithium precipitation problem during cycling is further alleviated and improved.

In some embodiments, the separator adjacent to the first negative electrode active material layer is provided with a polymer particle layer on a surface of the separator away from the first negative electrode active material layer.

In some embodiments, the separator adjacent to the first negative electrode active material layer is provided with an adhesive layer on a surface of the separator facing the first negative electrode active material layer, and a thickness of the adhesive layer is preferably 0 to 1 µm.

In some embodiments, the adhesive layer may be selected from at least one material among homopolymers or copolymers of methyl acrylate, ethyl acrylate, butyl acrylate, methyl methacrylate, ethyl methacrylate, ethylene, styrene, chlorostyrene, fluorostyrene, methylstyrene, acrylic acid, methacrylic acid, methacrylonitrile, or maleic acid. In some embodiments, the adhesive layer is preferably a polymer of acrylic acid, acrylate, styrene, isobutyl acrylate, or acrylonitrile.

In some embodiments, the first negative electrode active material layer includes a negative electrode active material, and the negative electrode active material includes a silicon-based active material, where the silicon-based material is selected from at least one of silicon, silicon oxide compounds, silicon-carbon compounds, or silicon alloys. In some embodiments, the silicon-based active material is preferably silicon-carbon particles.

In some embodiments, the negative electrode active material includes a carbon active material, where the carbon active material is selected from at least one of graphite or hard carbon. In some embodiments, the carbon active material is preferably graphite.

In some embodiments, based on the mass of the first negative electrode active material layer, the mass percentage X of silicon is preferably satisfying 2% ≤ X ≤ 5%. When silicon satisfies this range, the expansion of silicon can be better controlled, and the lithium precipitation problem can be alleviated.

In some embodiments, another surface of the negative electrode current collector is provided with a second negative electrode active material layer; and the second negative electrode active material layer does not contain silicon. At this time, silicon is distributed in the active material layer on one surface of the negative electrode current collector.

In some embodiments, the second negative electrode active material layer does not contain silicon, and there is no polymer particle layer on a surface of a separator adjacent to the second negative electrode active material layer.

In some embodiments, the second negative electrode active material layer does not contain silicon, and the separator adjacent to the second negative electrode active material layer includes a substrate, an inorganic coating coated on one surface of the substrate, and an adhesive layer coated on a surface of the inorganic coating. In some embodiments, another surface of the substrate of the separator is coated with an adhesive layer.

In some embodiments, the adhesive layer may be selected from at least one material among homopolymers or copolymers of methyl acrylate, ethyl acrylate, butyl acrylate, methyl methacrylate, ethyl methacrylate, ethylene, styrene, chlorostyrene, fluorostyrene, methylstyrene, acrylic acid, methacrylic acid, methacrylonitrile, or maleic acid. In some embodiments, the adhesive layer is preferably a polymer of acrylic acid, acrylate, styrene, isobutyl acrylate, or acrylonitrile.

In some embodiments, a thickness of the adhesive layer is preferably 0 to 1 µm.

In some embodiments, another surface of the negative electrode current collector is provided with a second negative electrode active material layer; the second negative electrode active material layer contains silicon. Based on a mass of the second negative electrode active material layer, a mass percentage of silicon is also X. At this time, silicon is evenly distributed in the active material layers on two surfaces of the negative electrode current collector.

In some embodiments, the second negative electrode active material layer contains silicon, and a polymer particle layer is disposed on one surface of a separator adjacent to the second negative electrode active material layer.

In some embodiments, the second negative electrode active material layer contains silicon, and a separator adjacent to the second negative electrode active material layer is provided with a polymer particle layer on a surface of the separator away from the second negative electrode active material layer.

In some embodiments, the second negative electrode active material layer contains silicon, and there is no polymer particle layer on a surface of a separator adjacent to the second negative electrode active material layer facing the second negative electrode active material layer.

In some embodiments, the polymer particle layer is selected from at least one of homopolymers or copolymers of vinylidene fluoride, hexafluoropropylene, ethylene, propylene, vinyl chloride, chloropropene, acrylic acid, acrylate, styrene, butadiene, or acrylonitrile. In some embodiments, the polymer particle layer is preferably polyvinylidene fluoride.

In some embodiments, the separator adjacent to the first negative electrode active material layer includes a substrate and an inorganic coating, the inorganic coating being disposed between the substrate and the polymer particle layer.

In some embodiments, another surface of a substrate of a separator adjacent to the first negative electrode active material layer is coated with an adhesive layer.

In some embodiments, the inorganic coating is selected from at least one material among boehmite, magnesium hydroxide, alumina, titania, silica, zirconia, tin oxide, magnesium oxide, zinc oxide, barium sulfate, boron nitride, aluminum nitride, or silicon nitride.

In some embodiments, the inorganic coating is preferably boehmite. In some embodiments, a thickness of the inorganic coating is preferably 0.5 µm to 6 µm.

In some embodiments, the substrate is selected from at least one material among polypropylene porous membranes, polyethylene porous membranes, polypropylene non-woven fabrics, polyethylene non-woven fabrics, or polypropylene-polyethylene-polypropylene porous composite membranes.

In some embodiments, the substrate is preferably a polyethylene (PE) porous polymer film. In some embodiments, a thickness of the substrate is preferably 3 µm to 6 µm.

According to a second aspect, the present application provides an electronic apparatus, including the electrochemical apparatus of the first aspect.

Beneficial effects:
Based on the characteristic that silicon-based negative electrodes are prone to expansion, the present application proposes a matching design scheme for silicon-based negative electrode plates and separators. By matching separators coated with polymer particle layers of different thicknesses according to the varying silicon content in the negative electrode active material layer coated on one surface of the negative electrode current collector in the negative electrode plate, space at bending regions can be reserved to buffer electrode plate extrusion and fracture, overcoming the electrode plate fracture and lithium precipitation problems caused by silicon-based expansion, while maximizing the energy density.

### BRIEF DESCRIPTION OF DRAWINGS

In the following, the drawings necessary for describing the embodiments of the present application or the prior art will be briefly described to facilitate the description of the embodiments of the present application. Obviously, the drawings described below are only some embodiments of the present application. For those skilled in the art, drawings of other embodiments can still be obtained based on the structures illustrated in these drawings.

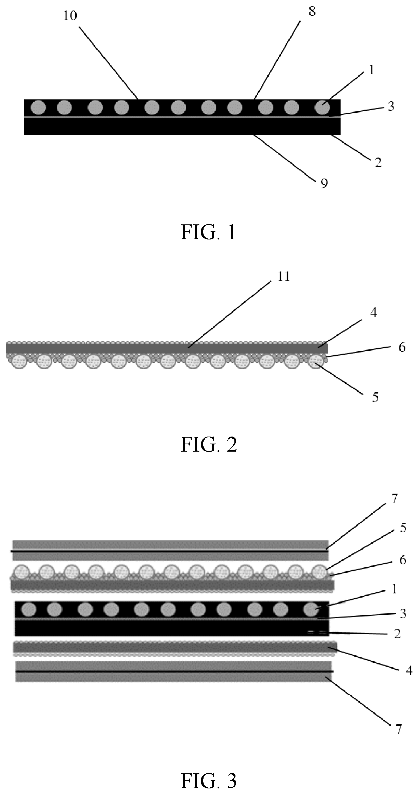

FIG. 1 is a schematic diagram of a design of a negative electrode plate in Example 1 of the present application.
FIG. 2 is a schematic diagram of a design of a separator matched with a first negative electrode active material layer in Example 1 of the present application.
FIG. 3 is a schematic diagram of a design of a battery in Example 1 of the present application.

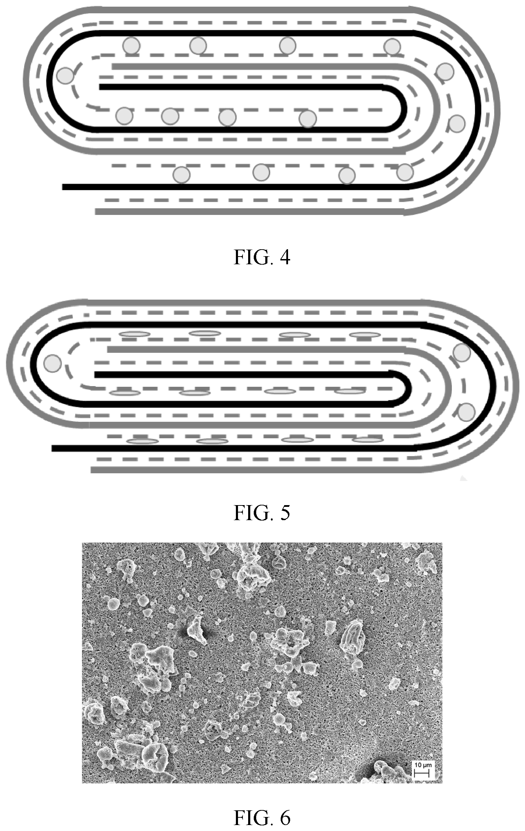

FIG. 4 is a schematic diagram of winding effect before compression of a battery in Example 1 of the present application.
FIG. 5 is a schematic diagram of winding effect after compression of a battery in Example 1 of the present application.
FIG. 6 is a surface image of a separator matched with a first negative electrode active material layer in Example 1 of the present application before compression.
FIG. 7 is a side image of a separator matched with a first negative electrode active material layer in Example 1 of the present application after compression.
FIG. 8 is a schematic diagram of a design of a negative electrode plate in Example 22 of the present application.
FIG. 9 is a schematic diagram of a design of a battery in Example 22 of the present application.

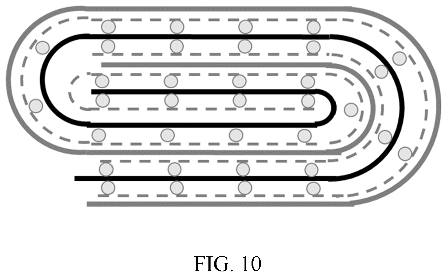

FIG. 10 is a schematic diagram of winding effect before compression of a battery in Example 22 of the present application.

Reference signs in the drawings: 1-silicon-carbon particles, 2-graphite, 3-negative electrode current collector, 4-substrate, 5-polymer particles, 6-inorganic coating, 7-positive electrode plate, 8-first negative electrode active material layer, 9-second negative electrode active material layer, 10-negative electrode plate, and 11-separator.

### DETAILED DESCRIPTION

To make the objectives, technical solutions, and advantages of the present application clearer, the technical solutions of the present application will be clearly and completely described below in conjunction with the embodiments. Obviously, the described embodiments are part of the embodiments of the present application, not all of them. The related embodiments described here are illustrative and are used to provide a basic understanding of the present application. The embodiments of the present application should not be interpreted as limiting the present application.

For brevity, only some numerical ranges are specifically disclosed herein. However, any lower limit can be combined with any upper limit to form a range not explicitly recited; and similarly, any lower limit can be combined with other lower limits to form a range not explicitly recited, and any upper limit can be combined with any other upper limit to form a range not explicitly recited. Furthermore, each individual point or single numerical value disclosed can itself serve as a lower limit or upper limit to be combined with any other point or single numerical value or with other lower or upper limits to form a range not explicitly recited.

In the description herein, unless otherwise specified, "above" and "below" include the number.

Unless otherwise specified, the terms used in the present application have the known meanings commonly understood by those skilled in the art. Unless otherwise specified, the values of various parameters mentioned in the present application can be measured by various measurement methods commonly used in the art (for example, can be tested according to the methods given in some embodiments of the present application).

In the detailed description and claims, a list of items connected by the term "at least one of", "at least one", "at least one of", or other similar terms may mean any combination of the listed items. For example, if items A and B are listed, then the phrase "at least one of A and B" means only A; only B; or A and B. In another example, if items A, B, and C are listed, then the phrase "at least one of A, B, and C" means only A; or only B; only C; A and B (excluding C); A and C (excluding B); B and C (excluding A); or all of A, B, and C. Item A may include a single element or multiple elements. Item B may include a single element or multiple elements. Item C may include a single element or multiple elements.

In the detailed description and claims, a list of items connected by the term "one of", "one", "one of", or other similar terms may mean any one of the listed items. For example, if items A and B are listed, then the phrase "one of A and B" means only A; or only B. In another example, if items A, B, and C are listed, then the phrase "one of A, B, and C" means only A; or only B; or only C.

It should also be noted in the description herein that the terms "first", "second", and the like are only used to distinguish the description and should not be understood as indicating or implying relative importance.

According to a first aspect, the present application provides an electrochemical apparatus, including a positive electrode plate, a negative electrode plate, and a separator; where the negative electrode plate includes a negative electrode current collector and a surface of the negative electrode current collector is provided with a first negative electrode active material layer containing a silicon-based material; the separator is disposed between the negative electrode plate and the positive electrode plate; and a polymer particle layer is disposed on a surface of the separator adjacent to the first negative electrode active material layer. Based on a mass of the first negative electrode active material layer, a mass percentage of silicon is X and a thickness of the polymer particle layer is H. In some embodiments, 0 < X < 2% and 0 < H < 1 µm. In some embodiments, 2% ≤ X < 10% and 1 µm ≤ H < 2.8 µm. In some embodiments, 10% ≤ X < 25% and 2.8 µm ≤ H < 4 µm. In some embodiments, 25% ≤ X ≤ 30% and 4 µm ≤ H ≤ 5 µm.

The present application matches separators coated with polymer particle layers of different thicknesses according to the varying silicon content in the negative electrode active material layer coated on the surface of the negative electrode current collector in the negative electrode plate, which can reserve space at bending regions to buffer electrode plate extrusion and fracture, overcome the electrode plate fracture and lithium precipitation problems at bending regions during cycling caused by silicon-based expansion, and maximize the energy density at the same time.

In some embodiments, 2% ≤ X < 5% and 1.5 µm ≤ H < 2.5 µm. In some embodiments, 5% ≤ X < 10% and 2.5 µm ≤ H < 2.8 µm. In some embodiments, 10% ≤ X < 15% and 2.8 µm ≤ H < 3.5 µm. In some embodiments, 15% ≤ X ≤ 20% and 3.5 µm ≤ H < 4 µm. When the silicon content in the negative electrode active material layer coated on one surface of the negative electrode current collector in the negative electrode plate and the thickness of the polymer particle layer on the matched separator satisfy this rule, the lithium precipitation problem at bending regions during cycling is further alleviated.

In some embodiments, the separator adjacent to the first negative electrode active material layer is provided with a polymer particle layer on a surface of the separator away from the first negative electrode active material layer.

In some embodiments, the separator adjacent to the first negative electrode active material layer is provided with an adhesive layer on a surface of the separator facing the first negative electrode active material layer. Since the adhesion of the polymer particle layer is relatively weak and the adhesion ability of the adhesive layer is stronger, in order to avoid separation between the electrode plate and the separator caused by the large expansion of the first negative electrode active material layer, it is preferable to place the side of the separator with the adhesive layer close to the side of the first negative electrode active material layer to ensure good adhesion between the first negative electrode active layer and the separator.

In some embodiments, the first negative electrode active material layer includes a negative electrode active material, and the negative electrode active material includes a silicon-based active material selected from at least one of silicon, silicon oxide compounds, silicon-carbon compounds, or silicon alloys. In some embodiments, the silicon-based active material is preferably silicon-carbon particles.

In some embodiments, the negative electrode active material includes a carbon active material selected from at least one of graphite or hard carbon. In some embodiments, the carbon active material is preferably graphite.

In some embodiments, based on the mass of the first negative electrode active material layer, the mass percentage X of silicon is preferably satisfying 2% ≤ X < 5%. When silicon satisfies this range, the expansion of silicon can be better controlled, and the lithium precipitation problem can be alleviated.

In some embodiments, another surface of the negative electrode current collector is provided with a second negative electrode active material layer; and the second negative electrode active material layer does not contain silicon. At this time, silicon is distributed in the active material layer on one surface of the negative electrode current collector.

In some embodiments, when the second negative electrode active material layer does not contain silicon, there is no polymer particle layer on a surface of a separator adjacent to the second negative electrode active material layer.

In some embodiments, the second negative electrode active material layer does not contain silicon, and the separator adjacent to the second negative electrode active material layer includes a substrate, an inorganic coating coated on one surface of the substrate, and an adhesive layer coated on a surface of the inorganic coating. In some embodiments, another surface of the substrate of the separator is coated with an adhesive layer.

In some embodiments, the adhesive layer may be selected from at least one material among homopolymers or copolymers of methyl acrylate, ethyl acrylate, butyl acrylate, methyl methacrylate, ethyl methacrylate, ethylene, styrene, chlorostyrene, fluorostyrene, methylstyrene, acrylic acid, methacrylic acid, methacrylonitrile, or maleic acid. In some embodiments, the adhesive layer is preferably a polymer of acrylic acid, acrylate, styrene, isobutyl acrylate, or acrylonitrile.

In some embodiments, a thickness of the adhesive layer is preferably 0 to 1 µm. In some embodiments, another surface of the negative electrode current collector is provided with a second negative electrode active material layer; and the second negative electrode active material layer contains silicon. Based on a mass of the second negative electrode active material layer, a mass percentage of silicon is also X. At this time, silicon is evenly distributed in the active material layers on two surfaces of the negative electrode current collector.

In some embodiments, the second negative electrode active material layer contains silicon, and a polymer particle layer is disposed on one surface of the separator adjacent to the second negative electrode active material layer.

In some embodiments, the second negative electrode active material layer contains silicon, and a separator adjacent to the second negative electrode active material layer is provided with a polymer particle layer on a surface of the separator away from the second negative electrode active material layer.

In some embodiments, the second negative electrode active material layer contains silicon, and there is no polymer particle layer on a surface of the separator adjacent to the second negative electrode active material layer facing the second negative electrode active material layer.

In some embodiments, the polymer particle layer is selected from at least one of homopolymers or copolymers of vinylidene fluoride, hexafluoropropylene, ethylene, propylene, vinyl chloride, chloropropene, acrylic acid, acrylate, styrene, butadiene, or acrylonitrile. In some embodiments, the polymer particle layer is preferably polyvinylidene fluoride.

In some embodiments, the separator adjacent to the first negative electrode active material layer includes a substrate and an inorganic coating, the inorganic coating being disposed between the substrate and the polymer particle layer. The present application has no particular limitation on the inorganic coating. For example, the inorganic coating may be selected from at least one material among boehmite, magnesium hydroxide, alumina, titania, silica, zirconia, tin oxide, magnesium oxide, zinc oxide, barium sulfate, boron nitride, aluminum nitride, or silicon nitride.

In some embodiments, another surface of a substrate of a separator adjacent to the first negative electrode active material layer is coated with an adhesive layer.

In some embodiments, the inorganic coating is preferably boehmite. In some embodiments, a thickness of the inorganic coating is preferably 0.5 µm to 6 µm.

In some embodiments, the substrate is selected from at least one material among polypropylene porous membranes, polyethylene porous membranes, polypropylene non-woven fabrics, polyethylene non-woven fabrics, or polypropylene-polyethylene-polypropylene porous composite membranes.

In some embodiments, the substrate is preferably a polyethylene (PE) porous polymer film. In some embodiments, a thickness of the substrate is preferably 3 µm to 6 µm.

In some embodiments, the negative electrode current collector may be copper foil, nickel foil, stainless steel foil, titanium foil, foamed nickel, foamed copper, a polymer substrate coated with a conductive metal, or a combination thereof.

In some embodiments, the first negative electrode active material layer further includes a conductive agent and a binder. The binder includes, but is not limited to, at least one of polyamide, polyacrylonitrile, acrylate polymers, polyacrylic acid, polyacrylate, sodium carboxymethyl cellulose, polyvinylpyrrolidone, polyvinyl ether, or styrene-butadiene rubber. In some embodiments, the conductive agent may use any conductive material as long as it does not cause chemical changes. In some embodiments, the conductive agent includes at least one of conductive carbon black, acetylene black, carbon nanotubes, Ketjen black, carbon fibers, or graphene.

In some embodiments, the positive electrode plate includes a positive electrode active material layer and a positive electrode current collector.

In some embodiments, the positive electrode active material layer includes a positive electrode active material. In some embodiments, the positive electrode active material includes at least one of nickel-cobalt ternary materials or phosphate-based materials. In some embodiments, the nickel-cobalt ternary material includes at least one of LiNiₓCo_{y}M_{(1-x-y)}O₂ materials, where M includes at least one of manganese, aluminum, magnesium, chromium, calcium, zirconium, molybdenum, silver, or niobium, 0.5 ≤ x ≤ 1, 0 ≤ y ≤ 0.5, and x + y ≤ 1. In some embodiments, the phosphate-based material includes at least one of LiMnₖB₍₁₋ₖ₎PO₄, where 0 ≤ k ≤ 1, and B element includes at least one of iron, cobalt, magnesium, calcium, zinc, chromium, or lead. In some preferred embodiments, the positive electrode active material is selected from nickel-cobalt ternary materials. In some embodiments, the positive electrode active material may have a coating on the surface or may be mixed with another compound having a coating. In some embodiments, the coating may include at least one coating element compound selected from oxides of coating elements, hydroxides of coating elements, hydroxy oxides of coating elements, oxycarbonates (oxycarbonate) of coating elements, or hydroxycarbonates (hydroxycarbonate) of coating elements. The compound used for the coating may be amorphous or crystalline. The coating elements contained in the coating may include Mg, Al, Co, K, Na, Ca, Si, Ti, V, Sn, Ge, Ga, B, As, Zr, or mixtures thereof. The coating may be applied by any method as long as the method does not adversely affect the performance of the positive electrode active material. For example, the method may include any coating method well known to those of ordinary skill in the art, such as spraying, dipping, and the like.

In some embodiments, the positive electrode active material layer further includes a conductive agent and a binder. In some embodiments, the binder includes, but is not limited to, polyvinyl alcohol, hydroxypropyl cellulose, diacetyl cellulose, polyvinyl chloride, carboxylated polyvinyl chloride, polyvinylpyrrolidone, polyurethane, polytetrafluoroethylene, polyvinylidene fluoride, styrene-butadiene rubber, or acrylic (ester)-modified styrene-butadiene rubber, and the like. In some embodiments, the conductive agent includes, but is not limited to, carbon-based materials, metal-based materials, conductive polymers, and mixtures thereof. In some embodiments, the carbon-based material is selected from graphite, carbon black, acetylene black, Ketjen black, carbon nanotubes, carbon fibers, graphene, or any combination thereof. In some embodiments, the metal-based material is selected from metal powder, metal fibers, copper, nickel, aluminum, or silver. In some embodiments, the conductive polymer is a polyphenyl derivative.

In some embodiments, the positive electrode plate further includes a positive electrode current collector, and the positive electrode current collector may be a metal foil or a composite current collector. For example, aluminum foil may be used. The composite current collector may be formed by forming a metal material (copper, copper alloy, nickel, nickel alloy, titanium, titanium alloy, silver, silver alloy, and the like) on a polymer substrate.

In some embodiments, the electrochemical apparatus further includes an electrolyte, and the electrolyte includes a lithium salt and a non-aqueous solvent.

In some embodiments, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, the lithium salt may be LiPF₆.

In some embodiments, the non-aqueous solvent may be carbonate compounds, carboxylate compounds, ether compounds, other organic solvents, or combinations thereof.

The above carbonate compounds may be chain carbonate compounds, cyclic carbonate compounds, fluorinated carbonate compounds, or combinations thereof.

Examples of the above chain carbonate compounds are dimethyl carbonate (DMC), diethyl carbonate (DEC), dipropyl carbonate (DPC), methyl propyl carbonate (MPC), ethyl propyl carbonate (EPC), methyl ethyl carbonate (MEC), and combinations thereof. Examples of cyclic carbonate compounds are ethylene carbonate (EC), propylene carbonate (PC), butylene carbonate (BC), vinylene carbonate (VEC), and combinations thereof. Examples of fluorinated carbonate compounds are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, and combinations thereof.

Examples of the above carboxylate compounds are methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, and combinations thereof.

Examples of the above ether compounds are dibutyl ether, tetraglyme, diglyme, 1,2-dimethoxyethane, 1,2-diethoxyethane, ethoxymethoxyethane, 2-methyltetrahydrofuran, tetrahydrofuran, and combinations thereof.

Examples of the above other organic solvents are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate esters, and combinations thereof.

According to some embodiments of the present application, the electrochemical apparatus of the present application includes, but is not limited to, primary batteries or secondary batteries of all types. In some embodiments, the electrochemical apparatus is a lithium secondary battery. In some embodiments, the lithium secondary battery includes, but is not limited to, lithium metal secondary batteries, lithium-ion secondary batteries, lithium polymer secondary batteries, or lithium ion polymer secondary batteries.

According to a second aspect, the electronic apparatus of the present application may be any apparatus using the electrochemical apparatus of the first aspect of the present application.

In some embodiments, the electronic apparatus includes, but is not limited to, notebook computers, pen-input computers, mobile computers, e-book players, portable phones, portable fax machines, portable copiers, portable printers, stereo headphones, video recorders, liquid crystal televisions, portable cleaners, portable CD players, mini discs, transceivers, electronic organizers, calculators, storage cards, portable recorders, radios, backup power supplies, motors, automobiles, motorcycles, power-assisted bicycles, bicycles, lighting fixtures, toys, game consoles, clocks, electric tools, flashlights, cameras, household large-scale storage batteries, or lithium ion capacitors, and the like.

### Examples and Comparative Examples

Hereinafter, examples and comparative examples are given to further specifically illustrate the present application, but the present application is not limited to these examples as long as it does not depart from the gist thereof.

### Preparation of Lithium-Ion Batteries

### Example 1

### (1) Preparation of negative electrode plate

Copper foil was used as the negative electrode current collector. 87.84 wt% artificial graphite, 9.76 wt% silicon-carbon, 0.5 wt% carboxymethyl cellulose (CMC), 1.7 wt% polyacrylic acid (PAA), and 0.2% carbon nanotubes were fully stirred and mixed in an appropriate amount of deionized water to form a first negative electrode slurry. The first negative electrode slurry was uniformly coated on one surface (that is, side A) of the copper foil. 97.6 wt% artificial graphite, 1.3 wt% carboxymethyl cellulose (CMC), and 1.1 wt% styrene-butadiene rubber (SBR) were fully stirred in an appropriate amount of deionized water to form a second negative electrode slurry, which was uniformly coated on another surface (that is, side B, opposite to side A) of the copper foil, and then dried and cold-pressed, followed by slitting, welding of tabs, to prepare the negative electrode plate. The active material layer on side A of the negative electrode current collector was the first negative electrode active material layer, in which the mass percentage of silicon was 4.3%; the active material layer on side B of the negative electrode current collector was the second negative electrode active material layer, in which the mass percentage of silicon was 0 (silicon percentage not greater than 0.5% can be considered as not containing silicon).

### (2) Preparation of positive electrode plate

Aluminum foil was used as the positive electrode current collector. 97.8 wt% lithium cobaltate (LCO), 0.8 wt% polyvinylidene fluoride (PVDF), and 1.4 wt% conductive carbon black were fully stirred and mixed in an appropriate amount of N-methylpyrrolidone solvent to form a uniform positive electrode slurry, which was uniformly coated on two surfaces of the aluminum foil, and then dried and cold-pressed, followed by slitting, welding of tabs, to prepare the positive electrode plate.

### (3) Preparation of electrolyte

In a dry argon atmosphere, LiPF₆ was added to a solvent mixed from propylene carbonate (PC), ethylene carbonate (EC), and diethyl carbonate (DEC) (weight ratio 1:1:1) and mixed uniformly to obtain the electrolyte, in which the concentration of LiPF₆ was 1.15 mol/L.

### (4) Preparation of separator

The separator (first separator) matched with the first negative electrode active material layer included a substrate, an inorganic coating coated on one surface of the substrate, and a polymer particle layer coated on the surface of the inorganic coating. The substrate was a 4.5 µm thick polyethylene (PE) porous polymer film, the inorganic coating was 2 µm thick boehmite, and the polymer particle layer was 2 µm thick polyvinylidene fluoride. Another surface of the substrate of the first separator was coated with an adhesive layer, and the adhesive layer was a polymer of acrylic acid or acrylate. The separator (second separator) matched with the second negative electrode active material layer included a substrate, an inorganic coating coated on one surface of the substrate, and an adhesive layer coated on the surface of the inorganic coating. Another surface of the substrate of the second separator was coated with an adhesive layer. The substrate was a 4.5 µm thick polyethylene (PE) porous polymer film, the inorganic coating was 2 µm thick boehmite, and the adhesive layer was a polymer of acrylic acid or acrylate.

### (5) Preparation of lithium-ion battery

After slitting, the positive electrode plate and the negative electrode plate were wound, with the separator separating the positive electrode plate and the negative electrode plate. The first negative electrode active material layer was matched with a separator coated with a polymer particle layer on one side, and the polymer particle layer on the separator was placed facing one side of the positive electrode plate. The second negative electrode active material layer was matched with a separator without a polymer particle layer. They were stacked in order, with the separator serving as isolation, wound to obtain a bare cell. The bare cell was hot-pressed, top-sealed, sprayed with code, vacuum-dried, injected with electrolyte, left at high temperature, and then subjected to pressure formation and capacity to obtain the finished lithium-ion battery.

### Examples 2-19

The preparation method of the lithium-ion batteries provided in Examples 2-19 follows Example 1, with the difference that:

The mass percentage of silicon in the active material layer (first negative electrode active material layer) on side A of the negative electrode current collector and the thickness of the polymer particle layer of its matched separator (first separator) were adjusted, and the mass percentages of artificial graphite, carboxymethyl cellulose, styrene-butadiene rubber, and conductive carbon black in the first negative electrode active material layer were adaptively adjusted. Specific data are shown in Table 1 below.

### Example 20

The preparation method of the lithium-ion battery provided in this example follows Example 1, with the difference that:

The silicon-based material in the active material layer (first negative electrode active material layer) on side A of the negative electrode current collector was silicon-oxygen material, the mass percentage of silicon and the thickness of the polymer particle layer of its matched separator (first separator) were adjusted, and the mass percentages of artificial graphite, carboxymethyl cellulose, styrene-butadiene rubber, and conductive carbon black in the first negative electrode active material layer were adaptively adjusted. Specific data are shown in Table 1 below.

### Example 21

The preparation method of the lithium-ion battery provided in this example follows Example 1, with the difference that:

The silicon-based material in the active material layer (first negative electrode active material layer) on side A of the negative electrode current collector was silicon material, the mass percentage of silicon and the thickness of the polymer particle layer of its matched separator (first separator) were adjusted, and the mass percentages of artificial graphite, carboxymethyl cellulose, styrene-butadiene rubber, and conductive carbon black in the first negative electrode active material layer were adaptively adjusted. Specific data are shown in Table 1 below.

### Comparative Examples 1-6

The preparation method of the lithium-ion batteries provided in Comparative Examples 1-6 follows Examples 1-19, with the difference that:

The mass percentage of silicon in the active material layer (first negative electrode active material layer) on side A of the negative electrode current collector and the thickness of the polymer particle layer of its matched separator (first separator) were adjusted, and the mass percentages of artificial graphite, carboxymethyl cellulose, styrene-butadiene rubber, and conductive carbon black in the first negative electrode active material layer were adaptively adjusted. Specific data are shown in Table 1 below.

### Example 22

The preparation method of the lithium-ion battery provided in this example follows Example 1, with the difference that:

### (1) Preparation of negative electrode plate

Copper foil was used as the negative electrode current collector. 92.2 wt% artificial graphite, 5.6 wt% silicon-carbon, 0.5 wt% carboxymethyl cellulose (CMC), 1.5 wt% polyacrylic acid (PAA), and 0.2% conductive carbon nanotubes were fully mixed by stirring in an appropriate amount of deionized water to form a negative electrode slurry, which was uniformly coated on two surfaces (that is, sides A and B) of the copper foil, and then dried and cold-pressed, followed by slitting and welding of tabs, to prepare the negative electrode plate. The active material layer on side A of the negative electrode current collector was the first negative electrode active material layer, in which the mass percentage of silicon was 2.5%. The active material layer on side B of the negative electrode current collector was the second negative electrode active material layer, in which the mass percentage of silicon was 2.5%.

### (4) Preparation of separator

The separator (first separator) matched with the first negative electrode active material layer and the separator (second separator) matched with the second negative electrode active material layer both included a substrate, an inorganic coating coated on one surface of the substrate, and a polymer particle layer coated on the surface of the inorganic coating. The substrate was a 4.5 µm thick polyethylene (PE) porous polymer film, the inorganic coating was 1.8 µm thick boehmite, and the polymer particle layer was 1.8 µm thick polyvinylidene fluoride.

### (5) Preparation of lithium-ion battery

After slitting, the positive electrode plate and the negative electrode plate were wound, with the separator separating the positive electrode plate and the negative electrode plate. The polymer particle layers on the separators were all placed facing one side of the positive electrode plate. They were stacked in order, with the separator serving as isolation, wound to obtain a bare cell. The bare cell was hot-pressed, top-sealed, sprayed with code, vacuum-dried, injected with electrolyte, left at high temperature, and then subjected to pressure formation and capacity testing to obtain the finished lithium-ion battery.

### Examples 23-33

The preparation method of the lithium-ion batteries provided in Examples 23-33 follows Example 22, with the difference that:

The mass percentage of silicon in the active material layer (first negative electrode active material layer) on side A of the negative electrode current collector and the thickness of the polymer particle layer of its matched separator (first separator) were adjusted, and the mass percentages of artificial graphite, carboxymethyl cellulose, styrene-butadiene rubber, and conductive carbon black in the first negative electrode active material layer, as well as the thicknesses of the inorganic coatings of the first separator and the second separator, were adaptively adjusted. Specific data are shown in Table 2 below.

### Comparative Examples 7-12

The preparation method of the lithium-ion batteries provided in Comparative Examples 7-12 follows Example 22, with the difference that:

The mass percentage of silicon in the active material layer (first negative electrode active material layer) on side A of the negative electrode current collector and the thickness of the polymer particle layer of its matched separator (first separator) were adjusted, and the mass percentages of artificial graphite, carboxymethyl cellulose, styrene-butadiene rubber, and conductive carbon black in the first negative electrode active material layer, as well as the thicknesses of the inorganic coatings of the first separator and the second separator, were adaptively adjusted. Specific data are shown in Table 2 below.

### Test methods

### 1. Silicon element test

The silicon content in the present invention refers to the mass percentage of silicon based on the mass of the negative electrode active material layer containing silicon. The test method is as follows: the negative electrode plate of the finished cell is taken, SEM/EDS is used to identify the active material layer containing silicon, the substance of the active material layer is subjected to ICP testing, and the mass percentage of silicon is obtained.

### 2. Test for separator polymer particle layer thickness

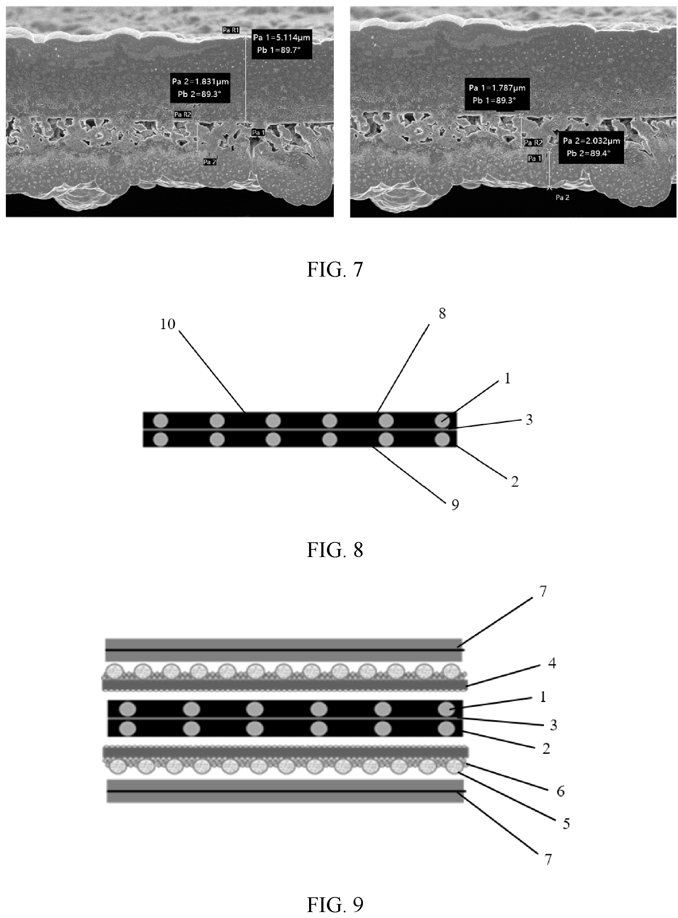

At the planar region of the cell, the position of the separator matched between the negative electrode active material layer containing silicon and the positive electrode plate is determined. A 6×6 mm sample is obtained by ion cutting, and SEM/EDS scanning is used to obtain the side view of the separator, as shown in FIG. 7. Based on the combination SEM and EDS, the separator substrate PP/PE, the inorganic coating, and the polymer particle layer can be distinguished. The thickness of the polymer particle layer is measured, 10 groups of data are taken from both the flat region and the protrusion, and the average value is calculated as the thickness of the polymer particle layer (the flat region here is roughly flat relative to the protrusion).

### 3. Test lithium precipitation area percentage at bending regions after 1000 cycles at 25°C

CCD imaging technology is used to obtain images of the electrode plate surface. By processing and detecting the images, the lithium precipitation area at bending regions is identified, and the percentage of the lithium precipitation area at bending regions to the total area can be calculated.

### Test results

**Table 1**

| No. | Type of silicon-based material | Mass percentage of silicon-based material in first negative electrode active material layer | Mass percentage of silicon in first negative electrode active material layer | Thickness of first separator polymer particle layer (µm) | Lithium precipitation area percentage at bending regions after 1000 cycles | Aluminum foil fracture at bending regions |
|---|---|---|---|---|---|---|
| Example 1 | Silicon-carbon | 9.77% | 4.3% | 2 | 1.2% | None |
| Example 2 | Silicon-carbon | 1.1% | 0.5% | 0.2 | 0.2% | None |
| Example 3 | Silicon-carbon | 2.2% | 1% | 0.5 | 0.5% | None |
| Example 4 | Silicon-carbon | 4.0% | 1.8% | 0.8 | 0.6% | None |
| Example 5 | Silicon-carbon | 4.5% | 2% | 1 | 2% | None |
| Example 6 | Silicon-carbon | 4.5% | 2% | 2 | 0.8% | None |
| Example 7 | Silicon-carbon | 10% | 4.5% | 1.5 | 2.4% | None |
| Example 8 | Silicon-carbon | 10% | 4.5% | 2 | 1.2% | None |
| Example 9 | Silicon-carbon | 17% | 8% | 2 | 2.8% | None |
| Example 10 | Silicon-carbon | 17% | 8% | 2.5 | 1.5% | None |
| Example 11 | Silicon-carbon | 22% | 10% | 3 | 1.8% | None |
| Example 12 | Silicon-carbon | 33% | 15% | 3 | 3.2% | None |
| Example 13 | Silicon-carbon | 33% | 15% | 3.2 | 2% | None |
| Example 14 | Silicon-carbon | 45% | 20% | 3.2 | 4% | None |
| Example 15 | Silicon-carbon | 45% | 20% | 3.5 | 2.2% | None |
| Example 16 | Silicon-carbon | 55% | 25% | 4.5 | 2.2% | None |
| Example 17 | Silicon-carbon | 55% | 25% | 4 | 2.4% | None |
| Example 18 | Silicon-carbon | 62% | 28% | 4.2 | 2.7% | None |
| Example 19 | Silicon-carbon | 70% | 30% | 4.5 | 2.8% | None |
| Example 20 | Silicon-oxygen | 5% | 2% | 1 | 1.5% | None |
| Example 21 | Silicon | 2% | 2% | 1 | 3% | None |
| Comparative Example 1 | Silicon-carbon | 9.77% | 4.3% | 0.5 | 3% | Cracks |
| Comparative Example 2 | Silicon-carbon | 4.5% | 2% | 0 | 3.8% | Cracks |
| Comparative Example 3 | Silicon-carbon | 14% | 6% | 0.5 | 4.5% | Cracks |
| Comparative Example 4 | Silicon-carbon | 22% | 10% | 0.8 | 5% | Cracks |
| Comparative Example 5 | Silicon-carbon | 45% | 20% | 2 | 5.2% | Cracks |
| Comparative Example 6 | Silicon-carbon | 68% | 28% | 3 | 5.5% | Cracks |

By comparing the data of Examples 1-21 and Comparative Examples 1-6 in Table 1, it can be seen that in the negative electrode plate of the present application, silicon is concentrated in the active material layer on one surface of the negative electrode current collector. The present application matches separators coated with polymer particle layers of different thicknesses according to the varying silicon content in the negative electrode active material layer coated on one surface of the negative electrode current collector in the negative electrode plate. When the matching relationship between the mass percentage X of silicon and the thickness H of the polymer particle layer satisfies the conditions defined in the present application, the electrochemical apparatus can reserve space at bending regions to buffer electrode plate extrusion and fracture, overcome the electrode plate fracture and lithium precipitation problems caused by silicon-based expansion, and maximize the energy density at the same time. By comparing the data of Examples 5-6, 7-8, 9-11, 12-13, 14-15, it can be seen that when the mass percentage X of silicon and the thickness H of the polymer particle layer further satisfy one of the conditions defined in the present application: 2% ≤ X < 5% and 1.5 µm ≤ H < 2.5 µm, 5% ≤ X < 10% and 2.5 µm ≤ H < 2.8 µm, 10% ≤ X < 15% and 2.8 µm ≤ H < 3.5 µm, and 15% ≤ X ≤ 20% and 3.5 µm ≤ H < 4 µm, the lithium precipitation problem during cycling of the electrochemical apparatus is further alleviated and mitigated. From the data shown in Comparative Examples 1-6, it can be seen that when the thickness H of the polymer particle layer is lower than the conditions defined in the present application, the problems brought by silicon-based expansion cannot be effectively overcome, especially the electrochemical apparatus will experience electrode plate extrusion and fracture at bending regions, accompanied by serious lithium precipitation problems during cycling; when the thickness H of the polymer particle layer is higher than the conditions defined in the present application, the energy density of the electrochemical apparatus will be seriously reduced.

**Table 2**

| No. | Type of silicon-based materia l | Mass percentag e of silicon-based material in first negative electrode active material layer | Mass percentag e of silicon in first negative electrode active material layer | Thicknes s of first separator polymer particle layer (µm) | Mass percentag e of silicon-based material in second negative electrode active material layer | Mass percentag e of silicon in second negative electrode active material layer | Thicknes s of second separator polymer particle layer (µm) | Lithium precipitatio n area percentage at bending regions after 1000 cycles | Aluminu m foil fracture |
|---|---|---|---|---|---|---|---|---|---|
| Example 22 | Silicon-carbon | 5.5% | 2.5% | 1.8 | 5.5% | 2.5% | 1.9 | 2.1% | None |
| Example 23 | Silicon-carbon | 5.5% | 2.5% | 2 | 5.5% | 3% | 1.9 | 1.6% | None |
| Example 24 | Silicon-carbon | 8% | 3.5% | 1.8 | 8% | 3.5% | 2 | 2.3% | None |
| Example 25 | Silicon-carbon | 8% | 3.5% | 2 | 8% | 3.5% | 2 | 1.8% | None |
| Example 26 | Silicon-carbon | 10% | 4.5% | 1.8 | 10% | 4.5% | 2.1 | 2.5% | None |
| Example 27 | Silicon-carbon | 10% | 4.5% | 2 | 10% | 5% | 2.1 | 1.7% | None |
| Example 28 | Silicon-carbon | 13% | 6% | 2 | 13% | 6% | 2.2 | 2.2% | None |
| Example 29 | Silicon-carbon | 13% | 6% | 2.5 | 13% | 6% | 2.2 | 2% | None |
| Example 30 | Silicon-carbon | 16.5% | 7.5% | 2 | 16.5% | 7.5% | 2.4 | 2.5% | None |
| Example 31 | Silicon-carbon | 16.5% | 7.5% | 2.5 | 16.5% | 8% | 2.4 | 2.2% | None |
| Example 32 | Silicon-carbon | 20% | 9% | 2 | 20% | 9% | 2.6 | 2.8% | None |
| Example 33 | Silicon-carbon | 20% | 9% | 2.8 | 20% | 9% | 2.6 | 2.4% | None |
| Comparativ e Example 7 | Silicon-carbon | 4.5% | 2% | 0 | 4.5% | 2% | 0 | 3.7% | Cracks |
| Comparativ e Example 8 | Silicon-carbon | 10% | 4.5% | 0 | 10% | 4.5% | 0 | 4.1% | Cracks |
| Comparativ e Example 9 | Silicon-carbon | 13% | 6% | 0.5 | 14% | 6% | 0.5 | 4.6% | Cracks |
| Comparativ e Example 10 | Silicon-carbon | 22% | 10% | 0.5 | 22% | 10% | 0.8 | 5.1% | Cracks |
| Comparativ e Example 11 | Silicon-carbon | 45% | 20% | 1 | 45% | 20% | 2 | 5.3% | Cracks |
| Comparativ e Example 12 | Silicon-carbon | 62% | 28% | 1 | 62% | 28% | 3 | 5.7% | Cracks |

By comparing the data of Examples 22-33 and Comparative Examples 7-12 in Table 2, it can be seen that in the negative electrode plate of the present application, silicon is evenly distributed in the active material layers on two surfaces of the negative electrode current collector. The present application matches separators coated with polymer particle layers of different thicknesses according to the varying silicon content in the negative electrode active material layer coated on one surface of the negative electrode current collector in the negative electrode plate. When the matching relationship between the mass percentage X of silicon and the thickness H of the polymer particle layer satisfies the conditions defined in the present application, the electrochemical apparatus can reserve space at bending regions to buffer electrode plate extrusion and fracture, overcome the electrode plate fracture and lithium precipitation problems caused by silicon-based expansion, and maximize the energy density at the same time. By comparing the data of Examples 22-23, 24-25, 26-27, 28-29, 30-31, 32-33, it can be seen that when the mass percentage X of silicon and the thickness H of the polymer particle layer further satisfy one of the conditions defined in the present application: 2% ≤ X < 5% and 1.5 µm ≤ H < 2.5 µm, 5% ≤ X < 10% and 2.5 µm ≤ H < 2.8 µm, 10% ≤ X < 15% and 2.8 µm ≤ H < 3.5 µm, and 15% ≤ X ≤ 20% and 3.5 µm ≤ H < 4 µm, the lithium precipitation problem during cycling of the electrochemical apparatus is further alleviated and mitigated. From the data shown in Comparative Examples 7-12, it can be seen that when the thickness H of the polymer particle layer is lower than that in the conditions defined in the present application, the problems brought by silicon-based expansion cannot be effectively overcome, especially the electrochemical apparatus will experience electrode plate extrusion and fracture at bending regions, accompanied by serious lithium precipitation problems during cycling; when the thickness H of the polymer particle layer is higher than that in the conditions defined in the present application, the energy density of the electrochemical apparatus will be seriously reduced.

Although illustrative embodiments have been demonstrated and described, those skilled in the art should understand that the above embodiments should not be interpreted as limiting the present application, and changes, substitutions, and modifications can be made to the embodiments without departing from the spirit, principles, and scope of the present application.

## Claims

1. An electrochemical apparatus, comprising a positive electrode plate, a negative electrode plate, and a separator; wherein the negative electrode plate comprises a negative electrode current collector and a surface of the negative electrode current collector is provided with a first negative electrode active material layer containing a silicon-based material;
the separator is disposed between the negative electrode plate and the positive electrode plate;
a polymer particle layer is disposed on a surface of the separator adjacent to the first negative electrode active material layer; and
based on a mass of the first negative electrode active material layer, a mass percentage of silicon is X; a thickness of the polymer particle layer is H; and the electrochemical apparatus satisfies one of the following conditions: $0 < X < 2 % and 0 < H < 1 μm ;$ $2 % \leq X < 10 % and 1 μm \leq H < 2.8 μm ;$ $10 % \leq X < 25 % and 2.8 μm \leq H < 4 μm ;$
and $25 % \leq X \leq 30 % and 4 μm \leq H \leq 5 μm .$

2. The electrochemical apparatus according to claim 1, wherein the electrochemical apparatus satisfies one of the following conditions: $2 % \leq X < 5 % and 1.5 μm \leq H < 2.5 μm ;$ $5 % \leq X < 10 % and 2.5 μm \leq H < 2.8 μm ;$ $10 % \leq X < 15 % and 2.8 μm \leq H < 3.5 μm ;$ and $15 % \leq X \leq 20 % and 3.5 μm \leq H < 4 μm .$

3. The electrochemical apparatus according to claim 1, wherein the separator adjacent to the first negative electrode active material layer is provided with a polymer particle layer on a surface of the separator away from the first negative electrode active material layer.

4. The electrochemical apparatus according to claim 1, wherein the first negative electrode active material layer comprises a negative electrode active material, and the negative electrode active material comprises a silicon-based active material and a carbon active material;
the silicon-based material is selected from at least one of silicon, silicon oxide compounds, silicon-carbon compounds, or silicon alloys; and/or
the carbon active material is selected from at least one of graphite or hard carbon.

5. The electrochemical apparatus according to claim 4, wherein the silicon-based active material is silicon-carbon particles and the carbon active material is graphite.

6. The electrochemical apparatus according to claim 1, wherein based on the mass of the first negative electrode active material layer, the mass percentage X of silicon satisfies 2% ≤ X ≤ 5%.

7. The electrochemical apparatus according to any one of claims 1 to 5, wherein another surface of the negative electrode current collector is provided with a second negative electrode active material layer;
the second negative electrode active material layer does not contain silicon; or
the second negative electrode active material layer contains silicon.

8. The electrochemical apparatus according to claim 7, wherein the second negative electrode active material layer does not contain silicon, and there is no polymer particle layer on a surface of a separator adjacent to the second negative electrode active material layer.

9. The electrochemical apparatus according to claim 1, wherein the polymer particle layer is selected from at least one of homopolymers or copolymers of vinylidene fluoride, hexafluoropropylene, ethylene, propylene, vinyl chloride, chloropropene, acrylic acid, acrylate, styrene, butadiene, or acrylonitrile.

10. The electrochemical apparatus according to claim 1, wherein the separator adjacent to the first negative electrode active material layer comprises a substrate and an inorganic coating, the inorganic coating being disposed between the substrate and the polymer particle layer; the inorganic coating is selected from at least one material among boehmite, magnesium hydroxide, alumina, titania, silica, zirconia, tin oxide, magnesium oxide, zinc oxide, barium sulfate, boron nitride, aluminum nitride, or silicon nitride; and
the substrate is selected from at least one material among polypropylene porous membranes, polyethylene porous membranes, polypropylene non-woven fabrics, polyethylene non-woven fabrics, or polypropylene-polyethylene-polypropylene porous composite membranes.

11. The electrochemical apparatus according to claim 1, wherein the separator adjacent to the first negative electrode active material layer is provided with an adhesive layer on a surface of the separator facing the first negative electrode active material layer.

12. The electrochemical apparatus according to claim 11, wherein the adhesive layer is a polymer formed from at least one of acrylic acid, acrylate, styrene, isobutyl acrylate, or acrylonitrile.

13. An electronic apparatus, comprising the electrochemical apparatus according to any one of claims 1 to 12.
